# EUROPEAN PATENT APPLICATION

(11) **EP 3 018 631 A1**
(43) Date of publication of application: **11.05.2016**
(21) Application number: 14820489.4
(22) Date of filing: 20.06.2014
(51) Int. Cl.: G06T 15/00, A63F 13/355, A63F 13/77, G06F 13/00

(54) **SCREEN-PROVIDING APPARATUS, SCREEN-PROVIDING SYSTEM, CONTROL METHOD, PROGRAM, AND RECORDING MEDIUM**

(30) Priority: 05.07.2013 JP 2013142133
(71) Applicant: Square Enix Co., Ltd., Tokyo 160-8430 (JP)
(72) Inventor: KAMIYAMA, Mitsuru, Tokyo 160-8430 (JP); MORIMOTO, Hiroki, Tokyo 160-8430 (JP)
(74) Representative: Pitchford, James Edward
(86) International application number: PCT/JP2014/003329
(87) International publication number: WO 2015/001754

(57) **Abstract**

A screen provision apparatus receives, from a client device, account identification information corresponding to the client device, renders a screen corresponding to that identification information, and transmits to the client device. Also, the screen provision apparatus, in a case where it determines that management information that is managed in association with the identification information satisfies a predetermined condition, obtains rendering grade information that defines the content of screen rendering processing. Then, the screen provision apparatus modifies the content of the screen rendering processing in accordance with the rendering grade information.

## Description

### TECHNICAL FIELD

The present invention relates to a screen provision apparatus, a screen provision system, a control method, a program and a storage medium, and particularly to a screen rendering technique in a cloud-type game provision service.

### BACKGROUND ART

In recent years, techniques for rendering computer graphics (CG) used in computer games or the like have become capable of providing more beautiful screens. For example, by using models and textures which reproduce even fine details faithfully to express influences due to light sources and actions of characters more similarly to reality, more realistic CG is being provided.

However, in order to render beautiful CG, it is necessary that a computing device for executing calculations in accordance with rendering processing, such as a CPU, a GPU, or the like, have suitable capabilities. As a matter of course, the price of such high-capability computing devices is set to be high. Specifically, the hardware of a PC, or the like, having a high-capability computing device of course becomes expensive, and the number of users who can have such hardware is limited. There is a tendency for home game consoles to be sold at a comparatively low cost even though they have high-capability computing devices since they are specialized for games. However, the development of recent rendering techniques has been remarkable, and it is necessary for a user to install the latest game console once every few years in order to receive provision of games that use the leading rendering techniques; there was the potential that the number of users would be limited from the aspect of installation costs. In other words, there was the possibility that the market for content such as a game that provided beautiful CG would tend to be reduced in absolute terms due to the number of users being limited.

Meanwhile, in recent years, so-called cloud gaming services, in which an external server performs rendering of game screens, and the rendered screens are provided as a streaming moving image to a client device that a user uses, have come to be provided as in PTL1. In such a case, because rendering processing for a game scene is executed on an external server, the user need not install hardware for performing the rendering processing itself. In other words, the user can receive a service provision if they possess hardware that has a function for connection to an external server, and that is capable of executing moving image decoding processing, for which required capabilities are comparatively low. Also, if the rendering capabilities of the external server support the leading rendering techniques, the user can use game content that uses those same techniques without payment of expensive hardware installation costs.

### CITATION LIST

### PATENT LITERATURE

PTL1: International Publication No. 2009/138878 Specification

### SUMMARY OF INVENTION

### TECHNICAL PROBLEM

For cloud gaming services such as in PTL1, game screen provision is performed by connecting to an external server (a provision server) via a network (communication infrastructure) such as the Internet. For this reason, it is envisioned that the service quality will change in accordance with the communication bandwidth that can be used in the communication infrastructure.

Specifically, the communication bandwidth that can be used changes in accordance with a communication environment (3G, LTE, Wi-Fi, or the like) used to connect the client device to the provision server, for example. Specifically, a received data rate of the client device may be limited in accordance with the communication environment that the client device uses. Also, the bandwidth that the provision server can use for a data transfer to one client device may change in accordance with the number of client devices simultaneously connected to the provision server, for example. Specifically, because the more client devices there are connected to the provision server to receive service provision, the narrower the communication bandwidth that is allocated for communication with 1 device is, a transmission data rate may be limited.

In this way, in conventional movie streaming services, a stoppage during moving image reproduction when a change occurs in the communication bandwidth that can be allocated for a client device, which could upset the user, is avoided by waiting to reproduce until completion of reception of data by which reproduction can be started. Alternatively, in conventional movie streaming services, configuration was taken to perform a service provision at a user desired image quality even under a communication bandwidth restriction by adjusting the overall amount of data that is received by modifying a moving image resolution forcibly or enabling a user selection of a moving image resolution.

Meanwhile, if game screens in which changes occur in accordance with operations performed in the client device are provided as in a cloud gaming service, responsiveness such that screens that reflect operations appropriately are provided within a suitable time is required. In other words, it is not realistic to perform a wait for reception of data in the client device as in conventional movie streaming services, and it is envisioned that rendering quality of game screens that are provided will be forcibly lowered. However, for such forced lowering of rendering quality, a method of modification considering the interests of the user or the communication environment has not been proposed thus far.

The present invention was made in view of such problems in the conventional technique. The present invention provides a screen provision apparatus, a screen provision system, a control method, a program and a storage medium for adjusting a method of rendering suitably in a system in which screens rendered in an external apparatus are received.

### SOLUTION TO PROBLEM

To solve the problems described above, a screen provision apparatus of the present invention comprises the following features. Specifically, the present invention provides the screen provision apparatus, comprising: reception means for receiving, from a client device, account identification information corresponding to the client device; rendering means for executing rendering processing to render a screen corresponding to the identification information received by the reception means; transmission means for transmitting, to the client device corresponding to the identification information, the screen rendered by the rendering means; determination means for determining whether or not management information managed in association the identification information satisfies a predetermined condition; and obtaining means for obtaining, in a case where it is determined by the determination means that the management information satisfies the predetermined condition, rendering grade information defining content of rendering processing of the screen, wherein the rendering means, in a case where it is determined by the determination means that the management information satisfies the predetermined condition, modifies the content of the rendering processing of the screen in accordance with the rendering grade information obtained by the obtaining means.

### ADVANTAGEOUS EFFECTS OF INVENTION

By such a configuration, in accordance with the present invention, it becomes possible to suitably adjust a method of rendering in a system in which screens rendered in an external apparatus are received.

Other features and advantages of the present invention will be apparent from the following description taken in conjunction with the accompanying drawings. Note that the same reference numerals denote the same or like components throughout the accompanying drawings.

### BRIEF DESCRIPTION OF THE DRAWINGS

Fig. 1 is a view illustrating a system configuration of a screen provision system according to embodiments of the present invention.
Fig. 2 is a block diagram for illustrating a functional configuration of a game server 100 according to embodiments of the present invention.
Fig. 3 is a block diagram for illustrating a functional configuration of a PC 200 according to embodiments of the present invention.
Fig. 4 is a view for showing an example of a GUI screen for setting various rendering grade adjustment items according to the first embodiment of the present invention.
Figs. 5A and 5B are views for showing examples of GUI screens for setting a method for adjusting for a rendering grade according to the first embodiment of the present invention.
Fig. 6 is a flowchart for exemplifying game processing executed by the game server 100 according to a first embodiment of the present invention.
Fig. 7 is a flowchart for exemplifying screen reception processing executed by the PC 200 according to a first embodiment of the present invention.
Fig. 8 is a view for showing an example of a GUI screen for setting a priority order of various rendering grade adjustment items according to the second embodiment of the present invention.
Fig. 9 is a flowchart for exemplifying game processing executed by the game server 100 according to the second embodiment of the present invention.
Fig. 10 is a flowchart for exemplifying game processing executed by the game server 100 according to according to a first variation of the present invention.
Fig. 11 is a flowchart for exemplifying game processing executed by the game server 100 according to a second variation of the present invention.

### DESCRIPTION OF EMBODIMENTS

### [First Embodiment]

Exemplary embodiments of the present invention will be described hereinafter in detail, with reference to the accompanying drawings. Note that an embodiment explained below explains an example in which the present invention is applied to a game server capable of rendering and transmitting 3D scene game screens in accordance with user operations on a client device which is an example of a screen provision apparatus. However, the present invention can be applied any device capable of rendering screens and transmitting them to a client device.

### <Screen Provision System Configuration>

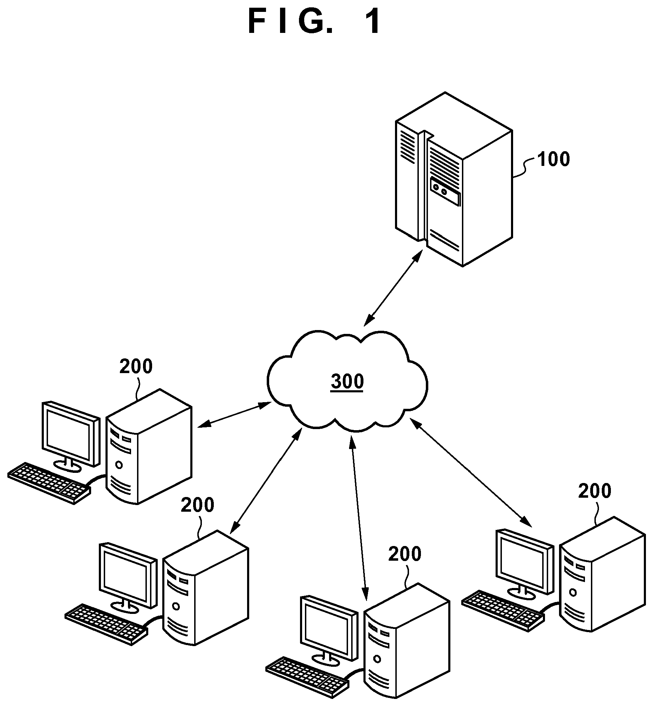

Fig. 1 is a view illustrating a system configuration of a screen provision system according to embodiments of the present invention.

As illustrated in Fig. 1, PCs 200, which are client devices that receive screen provision, are configured to be connectable to the game server 100 via a network 300. In the present embodiment, the client devices are explained as being the PCs 200, but implementation of the present invention is not limited to this. The client device may be an apparatus capable of connecting to the game server 100 and receiving screens, such as, for example, a home game console, a portable game device, a cellular phone, a PDF, a tablet, or the like. Also, as illustrated in the figure, a plurality of the PCs 200, which are client devices, can simultaneously connect to the game server 100. In such a case, the game server 100 performs rendering processing of game screens for each of the PCs 200 connected to the game server 100 in parallel, and provisions the game screens.

The network 300 is explained as an open communication network such as the Internet, for example, but implementation of the present invention is not limited to this. The network 300 may be configured as a closed communication means such as a LAN, and may be configured as a wired or wireless communication means that simply directly links the game server 100 and the PCs 200.

Note that in the present embodiment, explanation is given having game screen rendering processing be executed in the game server 100, but implementation of the present invention is not limited to this. The game server 100 may be configured by one or more apparatuses such as, for example, a central server that executes processing for analyzing input of operations performed on the PCs 200 and game processing, and a rendering server for receiving rendering commands from the central server rendering game screens and returning them. In other words, from the perspective of the client device, it is sufficient that the game server 100 be of a configuration for performing rendering of game screens in accordance with input of operations performed on the client device, and transmitting obtained game screens to the client device, and the execution of each function may be distributed among a plurality of apparatuses.

### <Game Server 100 Configuration>

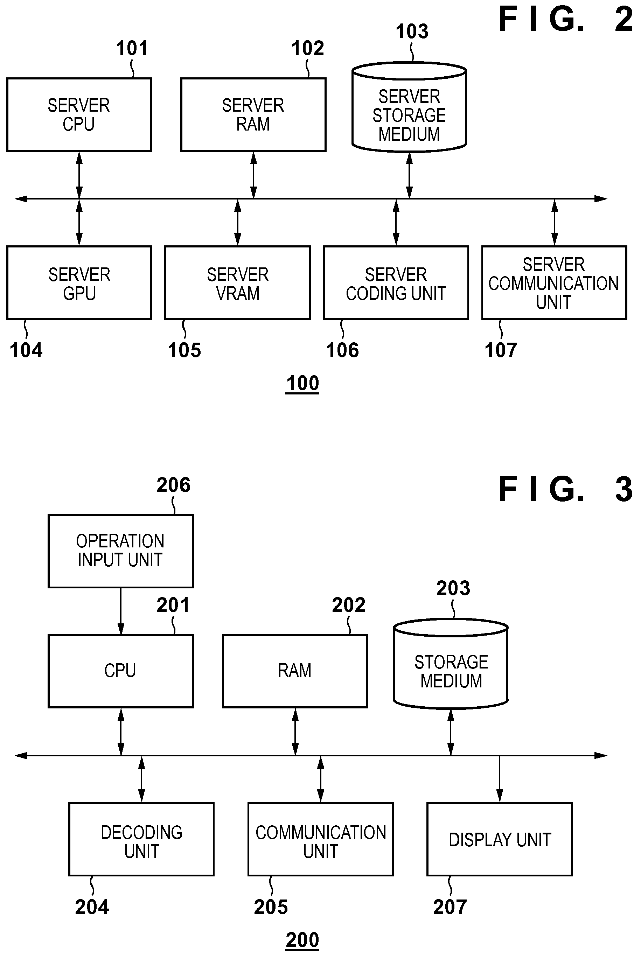

Fig. 2 is a block diagram for showing a functional configuration of the game server 100 according to embodiments of the present invention. Note that, in the present embodiment, in order to avoid confusion with components of the PCs 200, explanation is given adding the prefix "server" to components of the game server 100.

A server CPU 101 controls operation of each block that the game server 100 comprises. More specifically, the server CPU 101 controls operation of each block by reading an operation program for each block recorded in a server storage medium 103, loading it into a server RAM 102, and executing it.

The server RAM 102 is a volatile memory. The server RAM 102 is used not only as a loading region for the operation programs of each block that the game server 100 comprises, but also as a storage region for storing temporarily intermediate data output by operation of respective blocks, or the like.

The server storage medium 103 is a recording apparatus such as, for example, a non-volatile memory, an HDD, or the like. In the server storage medium 103, a program for game processing corresponding to provision of game screens, various data for rendering objects used for generation of game screens, or the like are recorded. In the various data for rendering objects, rendering object model data (or vertex and line data), various channel texture data which is applied to the model data, or the like, is included. Also, in the server storage medium 103, effect data and programs corresponding to illumination, shading or other effect processing which is used in game screen rendering processing is recorded.

A server GPU 104 renders game screen in accordance with game processing. Specifically, the server GPU 104 reads various data for a rendering object used in rendering processing from the server storage medium 103 and loads it into the GPU memory when it receives a rendering command. Then, the server GPU 104 performs rendering of game screens to a server VRAM 105 in accordance with viewpoint information by causing the data to move to an appropriate position/rotate in accordance with rendering object state information to arrange it. In addition to this, the server GPU 104 performs computational processing in accordance with effects such as illumination, shading, or the like, as necessary, and applies computation results to a rendering object or the game screen as a whole.

A server coding unit 106 generates encoded moving image data by encoding game screens rendered by the server GPU 104. In the present embodiment, explanation is given of game screens rendered in the game server 100 as being transmitted to the PCs 200 as encoded moving image data of a streaming format in order to reduce occupancy of a communication bandwidth for transmission of game screens. However, the working of the present invention is not limited to this, and it may be something that is transmitted to the PCs 200 as the data of game screens itself, or data converted into another format.

A server communication unit 107 is a communication interface that the game server 100 comprises. The server communication unit 107 can perform data transmission/reception with the PCs 200 via the network 300 in accordance with a predetermined protocol.

### <PCs 200 Configuration>

Next, using FIG. 3, explanation is given of a functional configuration of the PCs 200 according to embodiments of the present invention.

A CPU 201 controls operation of each block that the PCs 200 comprise. More specifically, the CPU 201 controls operation of each block by reading an operation program for each block recorded in a storage medium 203, loading it into a RAM 202, and executing it.

The RAM 202 is a volatile memory. The RAM 202 is used not only as a loading region for the operation programs of each block that the PCs 200 comprise, but also as a storage region for temporarily storing intermediate data output by operation of respective blocks, or the like.

The storage medium 203 is a recording apparatus such as, for example, a non-volatile memory, an HDD, or the like. In the storage medium 203 a program for a Web browsing application (hereinafter referred to simply as a browser) for receiving provision of a cloud gaming service, for example, a program for decoding/reproduction of encoded moving image data, or the like, is recorded. Note that in the present embodiment, encoded moving image data corresponding to game screens transmitted from the game server 100 will be explained as being provided to users by being displayed on regions on a portion of a GUI of a browser, but implementation of the present invention is not limited to this. In other words, display of a game screen may be performed using a dedicated application, and may be performed using a general-purpose application other than a browser.

A decoding unit 204 generates a game screen for one frame by decoding encoded moving image data which is generated and transmitted by the game server 100. As described above, in the present embodiment, game screens are transmitted from the game server 100 in an encoded moving image data format. For this reason, while explanation is given as something that performs processing for generating game screens by the decoding unit 204 performing decoding, this configuration is not necessary if the game screens themselves are transmitted.

A communication unit 205 is a communication interface that the PCs 200 comprises. The communication unit 205 can perform data transmission/reception with the game server 100, for example, via the network 300 in accordance with the same protocol as that of the server communication unit 107.

An operation input unit 206 is a user interface that the PCs 200 comprise such as, for example, a mouse, a keyboard, a game pad or the like. When the operation input unit 206 detects that operation input is performed on a user interface, it outputs a corresponding control signal to the CPU 201.

A display unit 207 is a display apparatus that is connected detachably or is integrated into the PCs 200, such as an LCD for example. In the present embodiment, by displaying game screens on a display region of the display unit 207 provision of game screens to a user is performed.

### <Rendering Grade Settings>

In the screen provision system of the present embodiment, it is possible for a user to perform rendering grade settings corresponding to game screen rendering processing in accordance with play style. For example, for a cloud gaming service, operation can be considered in which provision is performed by a user paying a real world monetary consideration in a fixed amount scheme in which a fixed amount is paid for a predetermined duration; a pay-as-you-go charging scheme in which a money amount is paid in accordance with a data transfer amount in a predetermined duration or a money amount is paid in accordance with a rendering computation amount of the server GPU 104 in a predetermined duration; or the like.

If provision of a cloud gaming service is performed by a pay-as-you-go charging scheme, it is difficult for a user to perform an adjustment of a usage fee. In a conventional online gaming service of a pay-as-you-go charging scheme, a user can adjust a usage fee by adjusting usage time. However, for this concept, the user side handles one end of rendering processing of game screens, and so it is something that depends on there not being a large difference between client devices for the computation amount corresponding to the processing on the server side.

In a cloud gaming service, it is envisioned that because rendering resources of the game server 100 are shared by a plurality of client devices, game provision that differs for each user is performed. In other words, an occupation ratio of rendering resources of the game server 100 changes in accordance with the game content that users use. Also, if a plurality of client devices are connected to the game server 100, the communication bandwidth over which game screen output is performed will be shared for data transmission to the plurality of client devices. In other words, because it is envisioned that the data rate of game screens will change in accordance with the game content that the users use, it is advantageous that a communication bandwidth that is allocated for each client device be caused to change in accordance with the data amount of the game screens. As described above, charging is performed with respect to a rendering resource usage amount, or a usage amount of communication bandwidth for when distributing game screens which are the output of rendering, or a combination of both of these; a charging approach that guarantees fairness between users can be considered accordingly.

Meanwhile, such rendering resource or communication bandwidth usage amounts are information that is difficult for a user of the service to understand, and are not something that the users can adjust arbitrarily in conventional systems. Because, as a result, adjustment of a usage fee for using a cloud gaming service of a pay-as-you-go charging scheme other than by restricting usage time is difficult, there was the possibility that the interest of the user in using a service of a pay-as-you-go charging scheme would be reduced.

Also, this not limited to the payment scheme; it can be said that there are a wide variety of needs since there are various user play styles for games. As described above, while more recent game content provides beautiful CG, the importance of the CG quality (hereinafter expressed as the image quality) differs depending on the user. Also, while usage amounts for communication bandwidth or rendering resources which are possible criteria for pay-as-you-go charging increase in proportion to the usage time of the user, the importance of usage time differs depending on the user.

In other words, putting all of this together:
- a desire that the usage fee be cheap, even if the image quality has to be poor
- a desire that the time for which usage is possible be long, even if the image quality has to be poor
- a desire for a service in which both the image quality and time for which usage is possible be sufficient, even if the usage fee has to be high, or the like, can be considered to be needs according to the play style of the user, and therefore an arrangement in which it is possible to modify the content (rendering grade) of the rendering processing of game screens in accordance with the needs of the user is proposed in the present embodiment.

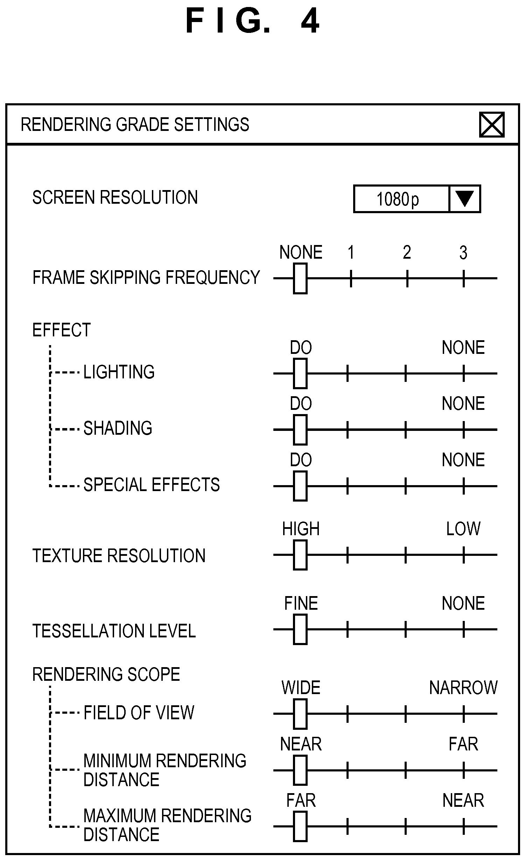

FIG. 4 illustrates an example of a GUI screen for modifying various items to adjust the rendering grade for game screen rendering processing in the game server 100 of the present embodiment. Data corresponding to this GUI screen may be supplied to the PCs 200 from the game server 100. A user can set the rendering grade for game screen rendering processing by performing predetermined operations on this GUI screen, which is displayed on a display region of the display unit 207.

In the example of FIG. 4,
- the resolution of the game screens
- the frequency of frame skipping
- level of effect application
- resolution of textures
- level of tessellation
- rendering scope
are arranged as items for which a user can adjust the rendering grade.

The resolution of the game screens is an item by which the number of pixels in a game screen can be adjusted. The computation amount for game screen rendering processing increases the more pixels there are in the game screens that are generated. Also, because the resolution of the game screens corresponds to the resolution of the moving image data, the data amount of encoded moving image data increases the more pixels there are in the game screens. In other words, by reducing the resolution of game screens, a user can reduce the rendering resource usage amount and thereby make the allocated communication bandwidth narrower. Additionally, for the resolution of the game screens, selectable items such as, for example, 480p, 720p, 1080p or the like, may be prepared to match with resolutions of moving image data.

The frequency of frame skipping is an item by which the frequency at which game screens are rendered can be adjusted. For example, assuming game content for which normally game screens are generated 60 times in one second (60 FPS), it is possible to create a situation in which game content is provided at 30 FPS by skipping (not rendering) the rendering of a game screen once every 2 frames. In other words, by increasing the frequency of frame skipping, it is possible to reduce the rendering resource usage amount, though a game screen update interval and a continuity will become rougher. Note that because the frequency of frame skipping corresponds to the frame rate of the encoded moving image data that is generated, it is possible to restrict the communication bandwidth that is used per unit time. In other words, if frame skipping is set, the server coding unit 106 may modify the content of encoding processing in accordance with the frequency.

The level of application of effects is an item by which it is possible to adjust the execution of computational processing corresponding to effects intended to be expressed in a game or so-called enriching of game screens. In general, for effects such as shading which are generated in conjunction with a light source or an influence of a secondary light source caused by a reflection, or the like, on an object surface, the computation amount is large. Also, because the application of special effects that are intended to be expressed in a game and that are caused to occur in response to a specific operation of a character, for example, makes computational processing other than normal rendering processing necessary, it leads to an increase in the computation amount. In other words, by making it possible to adjust the type or existence/absence of application of effects, or the application level, the usage amount of rendering resources can be adjusted.

The resolution of textures is an item by which it is possible to adjust a resolution capability of textures applied to rendering objects included in the rendering scope of game screens. Textures applied to rendering objects are read by the server GPU 104, and loaded into GPU memory, and the occupancy of GPU memory can be said to be usage of rendering resources. Also, the textures encompass textures of various channels for providing an unevenness of a material quality of a rendering object and not just so-called decal textures for applying a picture to a rendering object. For example, because a computation amount corresponding to an effect such as lighting is proportional to the number of pixels of these textures, it is possible to lower the computation amount by lowering the resolution of the textures.

The level of tessellation is an item by which it is possible to adjust how finely to express and render a polygon model of a rendering object. Even if a rendering object exists in a location separated far away from a viewpoint, for example, it will be rendered using the same model data as in a case in which it is near. In other words, even for a far rendering object for which the number of pixels occupied in the game screen is actually small, a computation proportional to the number of vertexes or the number of polygons of the model data is performed, and therefore it is more suitable that model data be prepared for a smaller number of polygons. However, if a rendering object is near the viewpoint, "a roughness" is conspicuous due to the number of polygons being small, and therefore tessellation is performed to divide polygons in accordance with a condition to make them look smooth. In other words, the computation amount corresponding to tessellation changes in accordance with the number of divisions of polygons. In other words, the smaller the level of tessellation that is applied to rendering objects that are near the viewpoint, for example, (the smaller the number of divisions), the more that the usage amount of rendering resources can be lowered.

The rendering scope is an item by which the number of rendering objects rendered in a game screen can be adjusted. In 3D scene rendering processing, rendering objects included within a quadrangular pyramid defined by a viewpoint position, a viewpoint direction, and a field of view, are target objects that are rendered in the screen that is generated. However, because it is difficult for rendering objects that are too near to the viewpoint to be recognized even if they are rendered, and a quadrangular pyramid is defined to extend an infinite distance, actually, rendering objects + background objects included in a truncated pyramid defined for a predetermined depth range in the quadrangular pyramid are set as the target objects. In other words, information defining shortest and longest depth distances, which define the truncated pyramid of the rendering scope is included in a viewpoint parameter for rendering of a game screen, and it is possible to modify the number of objects that are rendered by adjusting these. Because the number of rendering objects included in a game screen is directly linked to the computation amount of rendering processing, it is possible to reduce the usage amount of rendering resources by reducing the rendering scope. Also, it is possible to restrict the foregoing field of view for reduction of the rendering scope. Note that while in the present embodiment explanation is given for performing adjustment of the number of rendering objects by modifying the rendering scope, a configuration of performing adjustment by setting the existence/absence of rendering by specifying a type of rendering objects, or a combination of that configuration and rendering scope setting may be taken. For example, in an MMORPG (Massively Multiplayer Online Role-Playing Game), or the like, it may be possible to set so that an operation character of a user and characters of a group associated with that character are rendered, and remaining characters of other users are not rendered.

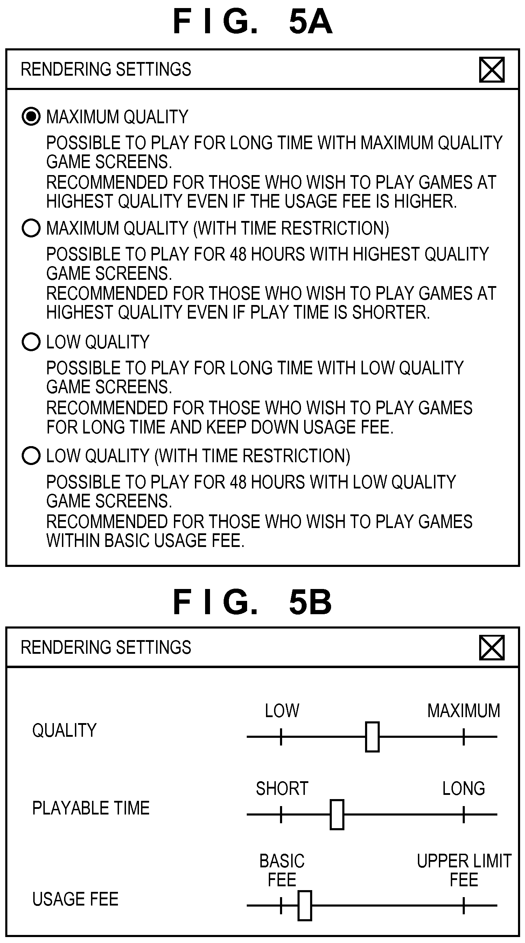

A user can use a service with game screens of an image quality matching a desired play style by performing setting of such rendering grade adjustment items in advance on the PC 200. Note that the adjustment items illustrated in FIG. 4 are examples, and configuration may be taken such that at least one these adjustment items, or other adjustment items can be adjusted in implementation of the present invention. Also, in adjustment of the adjustment items illustrated in FIG. 4, it is advantageous that a user have knowledge corresponding to game screen rendering processing. However, realistically, it is difficult for all users to sufficiently understand and set these adjustment items. For this reason, configuration may be taken in which a user applies a suitable adjustment on the game server 100 side simply by setting a desired play style, image quality, or the like, as illustrated in FIGS. 5A and 5B, for example.

### <Game Processing>

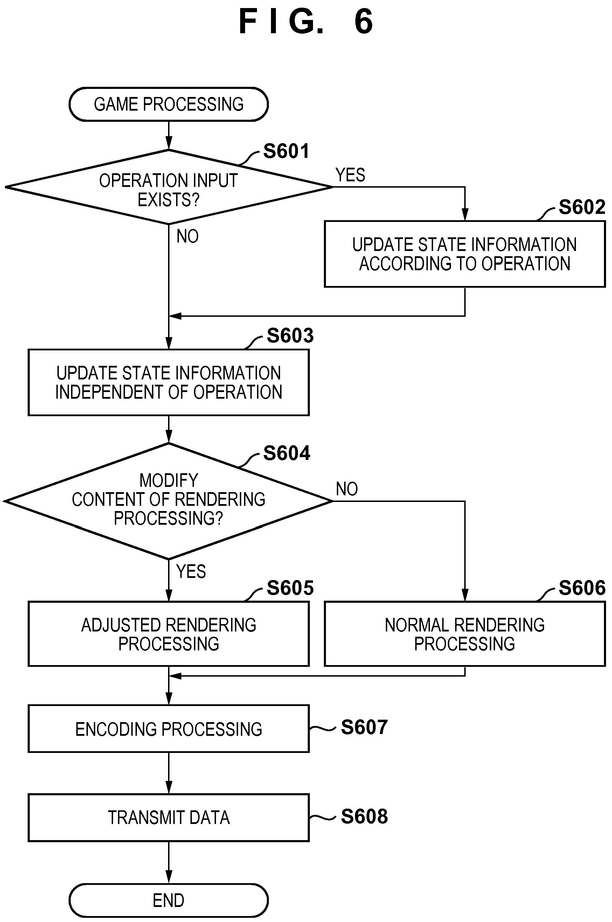

For game processing executed by the game server 100 of the present embodiment having this kind of configuration, specific processing is explained using a flowchart of FIG. 6. Note that explanation is given having this game processing be executed for each client device (the PCs 200) connected to the game server 100, be started when a game start request is made from a client device, for example, and be executed repeatedly for each frame.

In step S601, the server CPU 101 determines whether or not information of an operation input made on the PC 200 is received. The server CPU 101 moves the processing to step S602 in cases where it determines that information of an operation input is received, and moves the processing to step S603 in cases where it determines that information of an operation input is not received.

In step S602, the server CPU 101 updates state information in the game associated with identification information for identifying the user of the PC 200 in accordance with the information of the operation input. The state information encompasses various parameters that can be modified by a user such as a position or orientation of an operation character that the user operates, a viewpoint parameter, or the like, for example. Also, the identification information for identifying the user of the PCs 200 is assumed to be something that the PCs 200 receives as system login information (account) when the PC 200 is connected to the game server 100, for example.

In step S603, the server CPU 101 executes modification processing for parameters that are modified irrespective of operation on the PC 200 and that are included in state information associated with the identification information and updates the state information in a state for rendering a game screen of the current frame. Parameters that are modified irrespective of operation are parameters for non-user operation characters (NPC: Non-Player Character), parameters for the objective of temporally varying expression, or the like, for example.

In step S604, the server CPU 101 determines whether or not to modify the content of game screen rendering processing from normal processing. Specifically, the server CPU 101 makes a determination based on whether or not an adjustment parameter for rendering processing corresponding to game screens is recorded in the server storage medium 103 in association with the identification information. The adjustment parameter for the rendering processing corresponding to game screens is a parameter set in accordance with various adjustment items that are set via a GUI screen such as that of the foregoing FIG. 4, FIG. 5A or FIG. 5B, and it is assumed that in a case where the setting is performed, it is recorded in the server storage medium 103 in association with identification information. The server CPU 101 moves the processing to step S605 in cases where it determines that the content of the game screen rendering processing is modified from normal processing, and moves the processing to step S606 in cases where it determines that it is not modified.

In step S605, the server GPU 104, under the control of the server CPU 101, executes the rendering processing for a game screen corresponding to a current frame based on state information in accordance with a rendering processing adjustment parameter associated with the identification information.

Meanwhile, if in step S604 it is determined that the content of the game screen rendering is not modified, the server GPU 104, in step S606, executes normal rendering processing for a game screen corresponding to the current frame based on state information.

In step S607, the server coding unit 106, under the control of the server CPU 101, generates encoded moving image data that make the screen into a frame by encoding the game screen rendered by the server GPU 104.

In step S608, the server CPU 101 transfers the encoded moving image data generated by the server coding unit 106 to the server communication unit 107, causing it to be transmitted to the PC 200 and completes the game processing corresponding to the current frame.

With such a configuration, the game server 100 can render a game screen at a rendering grade set by the user and provide it to the PC 200. In other words, the game server 100 of the present embodiment can provide the PC 200 that made a request for provision with a game screen that satisfies the needs corresponding to the play style of the user.

### <Screen Reception Processing>

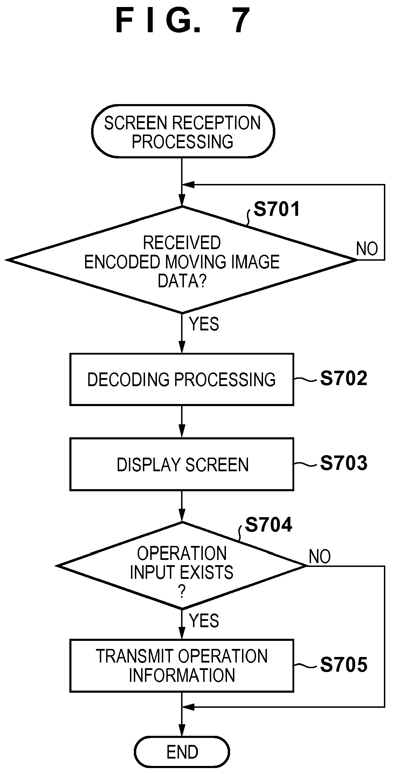

Next, using FIG. 7, explanation is given for details of image reception processing of the PC 200 which corresponds to service usage of the screen provision system in which a game screen rendered on the game server 100 is received. Note that the screen reception processing is explained as something that is started when an operation corresponding to a start of usage of game content that the game server 100 provides is made, for example, and is repeatedly executed for each frame.

In step S701, the CPU 201 determines whether or not the communication unit 205 received encoded moving image data corresponding to a game screen from the game server 100. The CPU 201 moves the processing to step S702 in cases where it determines that encoded moving image data is received, and repeats the processing of this step in cases where it determines that encoded moving image data is not received.

In step S702, the decoding unit 204, under the control of the CPU 201, decodes the received encoded moving image data, and generates a game screen corresponding to the current frame. Note that even though it is not clearly specified in the present specification, image data of a game screen corresponding to a past frame that is already received may be used in the decoding of the game screen corresponding to the current frame as necessary.

In step S703, the CPU 201 transfers the game screen corresponding to the current frame that is decoded to the display unit 207 to cause it to display it.

In step S704, the CPU 201 determines whether or not operation input corresponding to the current frame is performed. Specifically, the CPU 201 makes the determination of this step according to whether or not a control signal corresponding to an operation input that was made is received from the operation input unit 206. The CPU 201 moves the processing to step S705 in cases where it determines that an operation input corresponding to the current frame was made, and if it is determined that such an operation was not made, the CPU 201 completes the screen reception processing corresponding to the current frame.

In step S705, the CPU 201 converts the control signal corresponding to the operation input to a predetermined format, transfers it to the communication unit 205 causing the communication unit 205 to transmit it to the game server 100, and completes the screen reception processing corresponding to the current frame.

Note that adjustment items for a rendering grade corresponding to the rendering processing for a game screen in the present embodiment is explained as being set in advance, but configuration may be taken in which this can be executed in the middle of the screen reception processing so that it is possible for the user to adjust while confirming the image quality of the provided game screens.

As explained above, the screen provision apparatus of the present embodiment can adjust the method of rendering for a provided screen suitably reflecting the needs of the user. Specifically, the screen provision apparatus receives, from a client device, account identification information corresponding to the client device, renders a screen corresponding to that identification information, and transmits to the client device. Also, the screen provision apparatus, in a case where it determines that management information that is managed in association with the identification information satisfies a predetermined condition, obtains rendering grade information that defines the content of screen rendering processing. Then, the screen provision apparatus modifies the content of the screen rendering processing in accordance with the rendering grade information.

### [Second Embodiment]

In the above described first embodiment, explanation is given for controlling the content of game screen rendering processing in accordance with whether or not rendering grade setting for rendering processing is performed by a user. In other words, explanation is given for a method of modifying the content of rendering processing intentionally by the user himself performing a setting of a rendering grade adjustment item in accordance with a play style. In the present embodiment, explanation will be given for a method for adjusting the rendering grade in a situation in which it is necessary to lower the quality of provision of game screens (the service quality) against the will of the user.

In a system in which provision of a cloud gaming service is performed, such as the screen provision system of the present embodiment, it is envisioned that service provision is performed in a state in which a plurality of client devices (the PCs 200) are connected to the game server 100, which performs the provision of game screens. For this reason, in cases in which a large number of client devices simultaneously connect, and cases in which the provision of game content that requires rendering processing that has a large computation amount is requested from respective connected client devices, it is possible that a situation will occur in which the game server 100 is requested for more rendering resources than the rendering resources that can be allowed. Also, in cases in which a large number of client devices connect simultaneously, and in cases in which provision of game content for which the data rate of encoded moving image data that is outputted is large is requested by the connected client devices, a situation requiring output exceeding a communication bandwidth over which output is possible may occur. In such situations, because it is not possible to perform service provision to all of the connected client devices, it is necessary to adjust to a situation in which service provision is possible by causing the image quality of the game screens provided to the client devices to be lowered forcibly.

Also, with content requiring responsiveness (time required until an operation is reflected in a game screen) with respect to user operations such as for example so-called action games or shooting games, the following problems may occur. If the screen provision system of the present embodiment is implemented, it is envisioned that the PCs 200, which are the client devices, will connect to the game server 100 via an Internet service provider. Also, it can be considered that the PCs 200 will connect to the Internet service provider via a home wireless LAN router depending the installation environments of the PCs 200. In other words, even if outputting of encoded moving image data from the game server 100 is performed sufficiently within the communication bandwidth that is allocated, there is the possibility that it is impossible to transfer at a suitable data transfer rate in the communication bandwidth over which the PC 200 ultimately receives the encoded moving image data, and a delay may occur. In other words, there is a possibility that the interest of the user will wane because provision of game screens for content for which responsiveness to user operations is required will not be performed sufficiently.

In the present embodiment, explanation is given for a method of providing a game screen that is of a suitable image quality to the user in a situation, in which it is necessary to lower the service quality against the will of the user, that may occur due to the installation environment of the client device that receives the service provision or the connection state of the client device to the game server 100. Note that it is assumed that the configuration of the screen provision system of the present embodiment is the same as in the above described first embodiment, and explanation is omitted for the system and the functional configurations of each apparatus.

### <Rendering Grade Settings>

In the screen provision system of the present embodiment, it is possible for a user to set in advance adjustment criteria for a rendering grade corresponding to game screen rendering processing in a situation in which the service quality is lowered. In the screen provision system of the present embodiment, rendering grade adjustment items that a user can set may be similar to the items explained using FIG. 4 in the first embodiment, for example. In the screen provision system of the present embodiment, for such rendering grade adjustment items, it is possible for the user to set a priority order in which adjustment is performed in a situation in which the service quality is lowered. In other words, the user can designate in advance to the game server 100 as to which rendering grades of adjustment items to cause to be adjusted to cause rendering of game screens to be performed in a situation in which the service quality must be lowered.

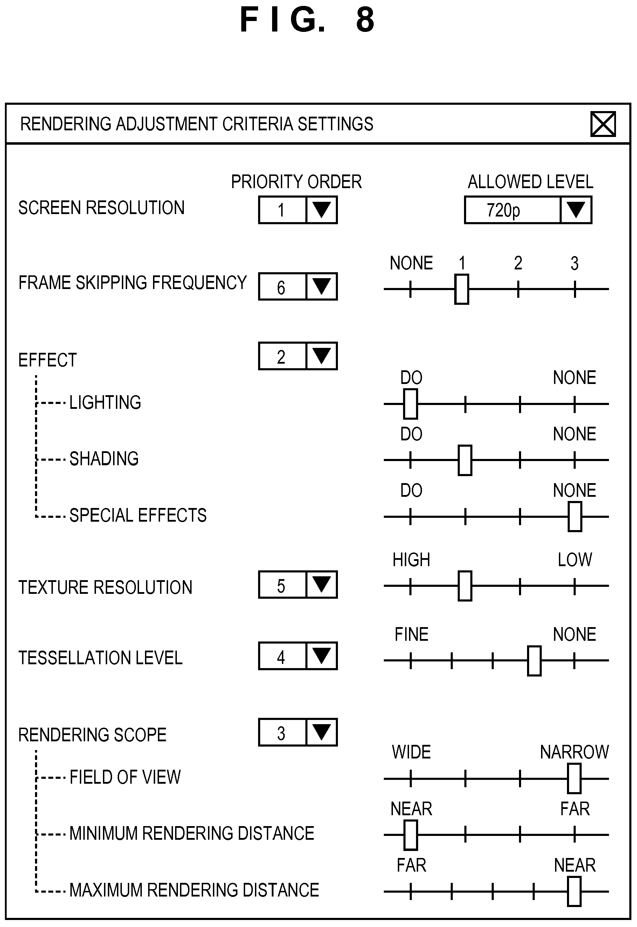

The priority order of rendering grade adjustment items may be settable by accepting operation input of a user on a GUI screen such as FIG. 8, for example. In the example of FIG. 8, in a situation in which the service quality must be lowered, adjustment is performed by first adjusting the resolution of game screens preferentially, and then selecting the effect application level, rendering scope, and so on. The adjustment may be performed to result in a game screen image quality at which service provision is possible, and adjustment may be performed for adjustment items up to a predetermined order set considering the system on the whole, the installation environment of the client device, or the like.

Note that in the example of FIG. 8, it is possible to configure so that it is possible for the user to set to an allowed level for each adjustment item. In such a case, configuration may be taken such that if the server CPU 101 determines that service provision is impossible even if the adjustment item of the first priority order is adjusted to the allowed level, for example, it repeatedly examines modification of the adjustment levels of adjustment items of subsequent orders, to set the adjustment parameters that result in the image quality at which the game screen ultimately can be provided. However, the working of the present invention is not limited to this, and a configuration may be taken in which a user simply sets a priority order of adjustment items only, and the server CPU 101 sets suitable rendering grade adjustment parameters in accordance with that priority order and predetermined criteria on the game server 100. Also, it is not necessary that setting of the priority order be performed by a user, and, for example, a configuration may be taken in which the server CPU 101 sets a rendering grade adjustment parameter in accordance with a predetermined priority order for the game content corresponding to a game screen provided to the client device.

### <Game Processing>

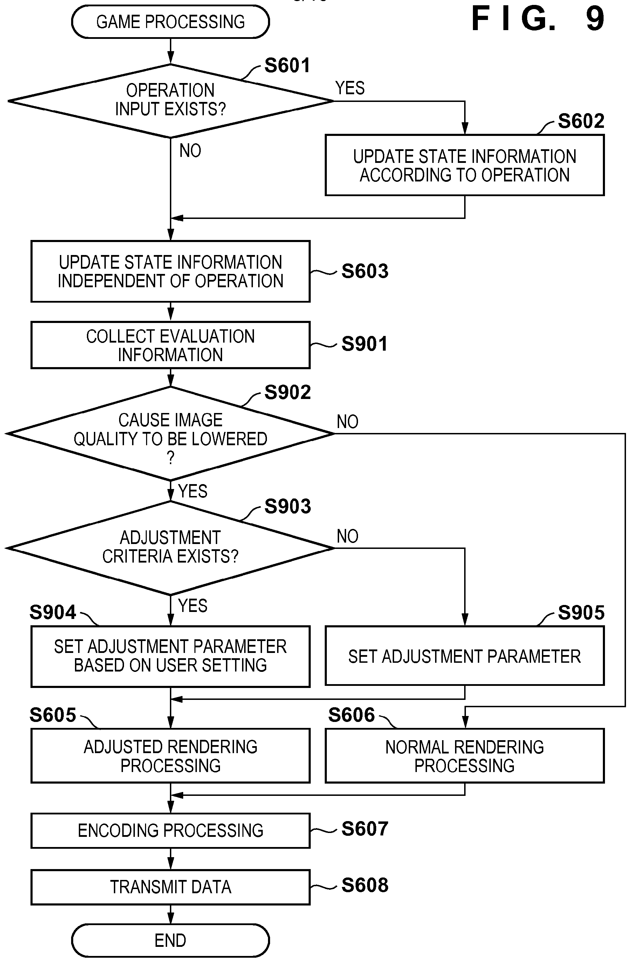

Here, for game processing executed by the game server 100 of the present embodiment, specific processing is explained using a flowchart of FIG. 9. Note that explanation is given having this game processing be executed for each client device (200) connected to the game server 100, be started when a game start request is made from a client device, for example, and be executed repeatedly for each frame. Also, in game processing of the present embodiment, for steps of performing processing that are the same as in the game processing of the first embodiment, the same reference numerals are given and explanation is omitted; the following stops at explanation of processing that is characteristic of the present embodiment.

In step S603, after processing for modifying parameters which are modified irrespective of operation is executed, the server CPU 101, in step S901, collects evaluation information for evaluating the quality of the service provision to the PC 200 in the current system environment. As described above, evaluation information may be:
- a usage amount of a rendering resource of the game server 100 that is used in relation to the PC 200 if normal rendering processing is performed
- a usage amount of a communication bandwidth for output of the game server 100 that is used in relation to the PC 200 if normal rendering processing is performed
- a reception rate at which encoded moving image data is received on the PC 200 currently.
Regarding the rate of reception of encoded moving image data on the PC 200, it is assumed that information of a data rate that the communication unit 205 measured, for example, is transmitted to the game server 100, and the server CPU 101 can grasp this information via the server communication unit 107. Note that in the present embodiment explanation is given assuming that the foregoing 3 pieces of information are obtained as evaluation information for evaluating quality of service provision, but it should be easily understood that implementation of the present invention is not limited to this. In other words, other information may be included in the evaluation information, and it may include only a portion of the foregoing 3 pieces of information.

In step S902, the server CPU 101 determines, based on the evaluation information, whether or not it is necessary to cause the image quality of game screens to be lowered for provision of game screens to the PC 200 in the current system environment. Specifically, the server CPU 101 first sets, based on the number of client devices currently connected to the game server 100, information of game content for which service provision is performed for each client device, or the like usage amounts for a communication bandwidth for output and a rendering resource (current allowable amounts) that can be allocated to the PC 200. The usage amounts for the rendering resource and the communication bandwidth for output that can be allocated are set such that service provision is possible for all of the client devices that are connected to the game server 100. The server CPU 101 makes the determination of this step in accordance with whether or not the usage amounts of the rendering resource and the communication bandwidth for output in the case that normal rendering processing is performed would exceed current allowable amounts. In other words, because if the normal usage amounts would exceed the current allowable amounts it would correspond to a situation in which service provision cannot be performed, it is necessary to cause the image quality of game screens to be lowered. Also, the server CPU 101 makes the determination of this step in accordance with whether or not the usage amount of the communication bandwidth for output in the case where normal rendering processing is performed exceeds a current encoded moving image data reception rate in the PC 200. The server CPU 101 moves the processing to step S903 in cases where it determines that it is necessary to cause the image quality of game screens to be lowered for provision of game screens to the PC 200, and moves the processing to step S606 in cases where that is determined not to be necessary.

In step S903, the server CPU 101 determines whether or not adjustment criteria for when modifying the content of game screen rendering processing from normal processing are set. Specifically, the server CPU 101 makes a determination in accordance with whether or not information for defining the priority order for rendering grade adjustment items for game screens is recorded in the server storage medium 103 in association with the identification information. Similarly to in the first embodiment, information that defines the priority order is assumed to be recorded in the server storage medium 103 associated with identification information in a case where a setting is performed by a user via a GUI screen such as that of FIG. 8. The server CPU 101 moves the processing to step S904 in cases where it determines that adjustment criteria are set, and moves the processing to step S905 in cases where it determines that adjustment criteria are not set.

In step S904, the server CPU 101, in accordance with a priority order of rendering grade adjustment items which are adjustment criteria, and allowed level information defined for each adjustment item, sets a rendering processing adjustment parameter based on user settings for which a service provision is possible within a range of a rate of reception of encoded moving image data in the PC 200 and a current allowable amount.

Meanwhile, in step S903, if it is determined that adjustment criteria are not set, the server CPU 101 in step S905 sets an adjustment parameter for rendering processing for which service provision is possible within the range of the rate of reception of encoded moving image data in the PC 200 and the current allowable amount. The adjustment parameter set in this step is not based on a user setting, and is a parameter set by the server CPU 101 such that service provision is possible. In other words, because it is an adjustment parameter that is not based on the adjustment criteria that the user desires, there is the possibility that a game screen obtained by rendering processing executed based on this adjustment parameter will not be of an image quality suitable to the user.

Thus in the screen provision system of the present embodiment, by the user setting the rendering processing adjustment criteria in advance, even in a situation in which the service quality is lowered and it is necessary to lower the image quality of game screens, it is possible to continue usage of content with game screens in which the taste of the user is reflected.

Note that the service in the screen provision system, in a case where provisioning is made with respect to 2 types of users - charged/non-charged - adjustment criteria setting may be configured to be provided only to the charged users. In other words, configuration may be taken in which by performing rendering grade adjustment so that minimum image quality game screens are provided unconditionally for non-charged users and performing rendering grade adjustment in accordance with adjustment criteria for charged users when a situation is reached in which it is necessary to lower the image quality of game screens, an advantage for charged users is guaranteed. Also, configuration may be taken such that if more than a restricted number of client devices, for which service provision is possible, are connected to the game server 100, service provision is stopped for non-charged users and rendering grade adjustment is performed having set the current allowable amount with respect to the remaining charged users.

### [First Variation]

In the above described second embodiment, explanation is given of an embodiment in which the game screen rendering processing, for when a situation is reached in which there is a necessity to cause the image quality of game screens that are provided to the PCs 200 to be lowered, is caused to differ in accordance with whether or not a rendering grade adjustment criteria is set in advance by the user. Specifically, explanation is given of an example in which if adjustment criteria are set by the user, rendering processing is executed with adjustment parameters set based on the adjustment criteria of the user setting, and if adjustment criteria are not set, the rendering processing is executed by an adjustment parameter simply set such that service provision is possible under the environmental conditions.

However, the present invention need not be of a configuration in which the game screen rendering processing for when a situation is reached in which it is necessary to cause the image quality of the provisioned game screens to be lowered is modified based on adjustment criteria set by the user. In other words for the present invention, if a predetermined condition for when provision of screens to client devices is performed is met, the content of the processing for rendering the screens to be provided may be modified in accordance with criteria set in advance, and it should be easily understood that that this criteria need not be something that is set by the user. In the present variation, explanation is given for an example in which the rendering grade adjustment criteria are set in advance on the game content provision side (developer).

### <Game Processing>

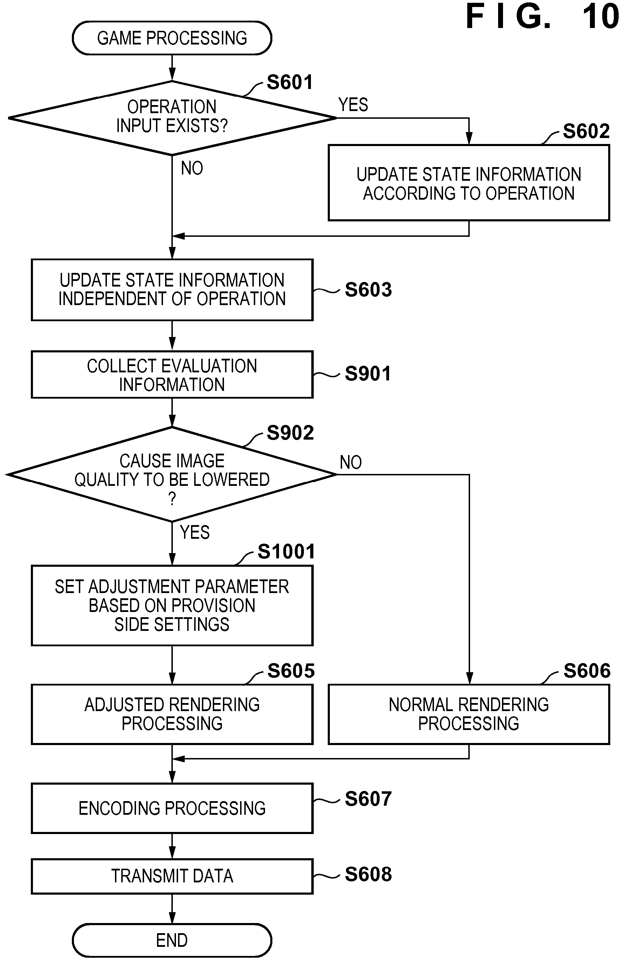

Here, for game processing executed by the game server 100 of the present embodiment, specific processing is explained using a flowchart of FIG. 10. Note that explanation is given having this game processing be executed for each client device (200) connected to the game server 100, be started when a game start request is made from a client device, for example, and be executed repeatedly for each frame. Also, in game processing of the present embodiment, for steps of performing processing that is the same as in the game processing of the first embodiment and the second embodiment, the same reference numerals are given and explanation is omitted; the following stops at explanation of processing that is characteristic of the present embodiment.

In step S902, if it is determined that it is necessary to cause the image quality of game screens to be lowered in the provision of game screens to the PCs 200, the server CPU 101, in step S1001, sets a rendering processing adjustment parameter by which service provision is possible within a current allowable amount and a range of a rate of reception of encoded moving image data on the PC 200. Specifically, the server CPU 101 references information of the rendering grade adjustment criteria set on the content provision side in advance for game content that is provided. Then, the server CPU 101 sets adjustment parameters in accordance with the priority order of the rendering grade adjustment items defined by that information, and information of the allowed level defined for each adjustment item, and moves the processing to step S605.

With such a configuration, in a situation in which it is necessary to cause the image quality of game screens to be lowered for users using the same content, for example, game screens of a suitable image quality that the provision side proposes are always provided. In other words, in accordance with the screen provision system according to the present variation, even if a user does not set the rendering grade, it is possible to always receive a provision of game screens of an image quality recommended by the provider of the content.

### [Second Variation]

In the first variation described above, explanation is given for modifying game screen rendering processing for when a situation is reached in which it is necessary to cause the image quality of game screens that are provided to be lowered based on rendering grade adjustment criteria set in advance by the provider of the game content.

Note that it is considered that a screen provision system such as in the first variation will be configured such that it is possible to provide multiple game content items and not just a single game content item. In other words, an aspect can be considered in which in the game server 100, configuration is such that game programs of game content provided by different providers can be executed, and screen provision is performed by a program corresponding to content selected by a user being executed.

Meanwhile, in a case where rendering grade adjustment criteria settings are entrusted to the content providers as in the first variation, there is a possibility that a difference in the image quality of the game screens that are provided will occur between users of the each content item due to differences in adjustment criteria between content items. For example, assume that for a game content item called A, an adjustment of screen resolution to 480p is allocated as an allowed level to a highest priority order, and for a game content item called B, a setting of a rendering scope to rendering of only characters of an affiliated group of operation characters is allocated as an allowed level to a highest priority order. Here, when a situation is reached in which it is necessary to cause the image quality of game screens to be lowered due to client device connections to the game server 100 being concentrated, screens of a low resolution that are rough are provided to the user of content A, and screens in which the number of rendering objects is reduced are provided to the user of content B maintaining the high resolution. In other words, even if content A and B are content items that have equivalent rendering processing computation amounts, there is the possibility that a difference will occur in terms of the "appearance" of screen between users playing the games simultaneously.

In the present variation, explanation is given of an example in which in rendering processing content adjustment, rendering grade adjustment criteria that does not depend on the content that can be provided are set in order to reduce the difference in quality between users that are using different content in this way.

### <Game Processing>

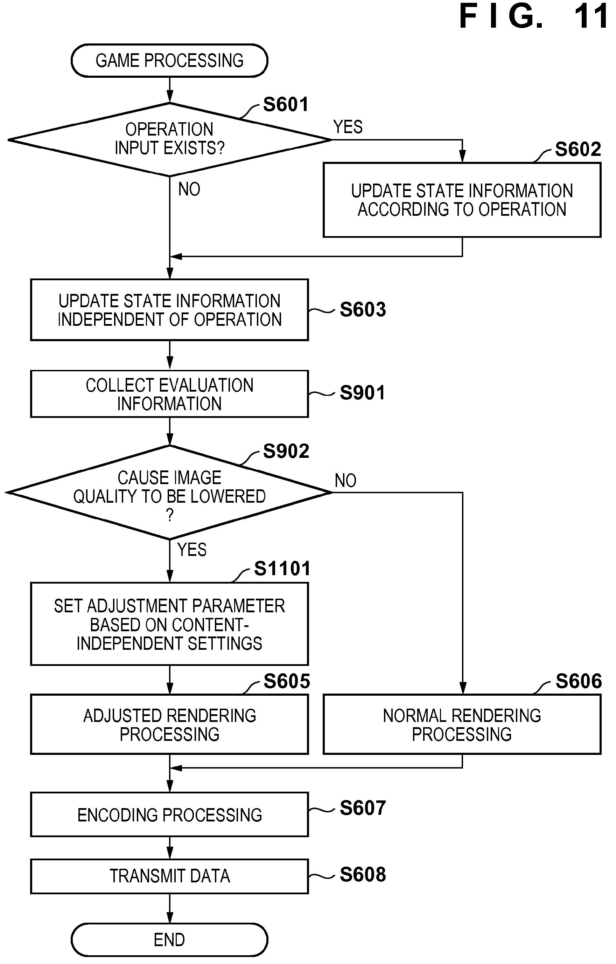

Here, for game processing executed by the game server 100 of the present embodiment, specific processing is explained using a flowchart of FIG. 11. Note that explanation is given having this game processing be executed for each client device (200) connected to the game server 100, be started when a game start request is made from a client device, for example, and be executed repeatedly for each frame. Also, in game processing of the present embodiment, for steps of performing processing that is the same as in the game processing of the first embodiment and the second embodiment, the same reference numerals are given and explanation is omitted; the following stops at explanation of processing that is characteristic of the present embodiment.

In step S902, if it is determined that it is necessary to cause the image quality of game screens to be lowered in the provision of game screens to the PC 200, the server CPU 101, in step S1101, sets a rendering processing adjustment parameter by which service provision is possible within a current allowable amount and a range of a rate of reception of encoded moving image data on the PC 200. Specifically, the server CPU 101 references information of the rendering grade adjustment criteria set commonly for all content that can be provided. Then, the server CPU 101 sets adjustment parameters in accordance with the priority order of the rendering grade adjustment items defined by that information, and information of the allowed level defined for each adjustment item, and moves the processing to step S605.

With such a configuration, in a situation in which it is necessary to cause the image quality of game screens to be lowered, game screens for which rendering grade adjustment is performed based on similar criteria between users that use differing content, for example, are provided. In other words, because a degree to which image quality of game screens that are provided is lowered is similar between users that use differing content if their communication environments are equivalent, it is possible to perform service provision that guarantees fairness.

As described above, explanation is given for rendering grade adjustment corresponding to game screen rendering processing being performed in a case where a rendering grade adjustment setting is made by a user in the first embodiment, and in a case where a situation is reached in which the image quality of game screen must be lowered in the second embodiment, and the first and second variations, but it is not necessary that these embodiments be implemented independently. In other words, implementation may combine the first and second embodiments and the first and second variation in any way.

### Other Embodiments

The present invention is not limited to the above embodiments and various changes and modifications can be made within the spirit and scope of the present invention. The present invention is not limited to the above embodiments and various changes and modifications can be made within the spirit and scope of the present invention. Also, the screen provision apparatus according to the present invention can be realized by a program for causing a computer to function as a screen provision apparatus. The program can be provided/distributed by being recorded on a computer-readable storage medium, or through an electronic communication line. Accordingly, the following claims are attached to make public the scope of the present invention.

This application claims the benefit of Japanese Patent Application No. 2013-142133, filed July 5, 2013, which is hereby incorporated by reference herein in its entirety.

## Claims

1. A screen provision apparatus, comprising:
reception means for receiving, from a client device, account identification information corresponding to the client device;
rendering means for executing rendering processing to render a screen corresponding to the identification information received by the reception means;
transmission means for transmitting, to the client device corresponding to the identification information, the screen rendered by the rendering means;
determination means for determining whether or not management information managed in association the identification information satisfies a predetermined condition; and
obtaining means for obtaining, in a case where it is determined by the determination means that the management information satisfies the predetermined condition, rendering grade information defining content of rendering processing of the screen, wherein
the rendering means, in a case where it is determined by the determination means that the management information satisfies the predetermined condition, modifies the content of the rendering processing of the screen in accordance with the rendering grade information obtained by the obtaining means.

2. The screen provision apparatus according to claim 1, wherein the rendering grade information is information defining a priority order for processing items in the rendering processing of the screen, and wherein
the rendering means renders the screen by executing processing items, among processing items in the rendering processing of the screen, having a priority order up until an order according to the management information.

3. The screen provision apparatus according to claim 1 or 2, wherein the rendering grade information is information defining a priority order in the rendering processing of the screen for at least one of a resolution of the screen, a refresh rate of the screen, a level of application of effect processing corresponding to the screen, a resolution of a texture applied to a rendering object, a level of application of tessellation of a rendering object, and information restricting a number of rendering objects rendered in the screen.

4. The screen provision apparatus according to any one of claims 1-3, wherein a plurality of client devices can connect to the screen provision apparatus, and wherein the screen provision apparatus
further comprises specification means for specifying a rendering resource that can be allocated for the client device corresponding to identification information for rendering processing by the rendering means, and wherein
the determination means determines, in a case where the rendering resource that can be allocated specified by the specification means is less than a predetermined amount, that the management information satisfies the predetermined condition.

5. The screen provision apparatus according to any one of claims 1-4, wherein the management information includes information indicating whether or not a setting of the rendering grade information is accepted from a client device, and wherein
the determination means determines, in a case where information indicating the setting of the rendering grade information is accepted is included in the management information associated with the identification information, that the management information satisfies the predetermined condition.

6. The screen provision apparatus according to any one of claims 1-5, further comprising setting means for setting a transmission bandwidth that can be allocated for the client device corresponding to the identification information, wherein
the determination means determines, in a case where the transmission bandwidth that can be allocated set by the setting means is narrower than a predetermined value, that the management information satisfies the predetermined condition.

7. The screen provision apparatus according to claim 6, wherein the setting means sets the transmission bandwidth that can be allocated based on at least one of a received data rate in the client device corresponding to the identification information, and a data rate of transmission to a client device connected to the screen provision apparatus by the transmission means.

8. The screen provision apparatus according to any one of claims 1-7, wherein the management information includes information indicating whether or not an account corresponding a client device is an account for receiving a provisioning service of the screen by paying a real world predetermined monetary consideration, and wherein
the determination means determines, in a case where information indicating the account for receiving the provisioning service of the screen by paying the real world predetermined monetary consideration is included in the management information associated with the identification information, that the management information satisfies the predetermined condition.

9. The screen provision apparatus according to any one of claims 1-8, further comprising encoding means for generating encoded moving image data by encoding the screen rendered by the rendering means, wherein
the encoding means modifies content of encoding processing in accordance with content of rendering processing executed in the rendering of the screen, and wherein
the transmission means transmits encoded moving image data generated by the encoding means as the screen.

10. The screen provision apparatus according to any one of claims 1-9, wherein the reception means further receives information of an operation performed on a client device, and wherein
the screen provision apparatus further comprises update means for updating, in accordance with the information of the operation received from the client device corresponding to the identification information, information corresponding to a configuration of the screen associated with the identification information, and wherein
the rendering means renders the screen in accordance with the information corresponding to the configuration of the screen.

11. A screen provision system for providing a screen rendered in a screen provision apparatus to a client device, wherein
the client device comprises:
first transmission means for transmitting account identification information corresponding to the client device;
first reception means for receiving the screen rendered in the screen provision apparatus; and
reproduction means for displaying the screen received by the first reception means on display means, and
the screen provision apparatus comprises:
second reception means for receiving the identification information from the client device;
rendering means for rendering the screen corresponding to the identification information by executing rendering processing;
second transmission means for transmitting, to the client device the screen rendered by the rendering means;
determination means for determining whether or not management information managed in association the identification information satisfies a predetermined condition; and
obtaining means for obtaining, in a case where it is determined by the determination means that the management information satisfies the predetermined condition, rendering grade information defining content of rendering processing of the screen, wherein
the rendering means, in a case where it is determined by the determination means that the management information satisfies the predetermined condition, modifies the content of the rendering processing of the screen in accordance with the rendering grade information obtained by the obtaining means.

12. A method of controlling a screen provision apparatus, comprising:
a reception step of reception means of the screen provision apparatus receiving, from a client device, account identification information corresponding to the client device;
a rendering step of rendering means of the screen provision apparatus executing rendering processing to render a screen corresponding to the identification information received in the reception step;
a transmission step of transmission means of the screen provision apparatus transmitting, to the client device corresponding to the identification information, the screen rendered in the rendering step;
a determination step of determination means of the screen provision apparatus determining whether or not management information managed in association the identification information satisfies a predetermined condition; and
an obtaining step of obtaining means of the screen provision apparatus obtaining, in a case where it is determined in the determination step that the management information satisfies the predetermined condition, rendering grade information defining content of rendering processing of the screen, wherein
the rendering means in the rendering step, in a case where it is determined in the determination step that the management information satisfies the predetermined condition, modifies the content of the rendering processing of the screen in accordance with the rendering grade information obtained in the obtaining step.

13. A program for causing 1 or more computers to function as each means of the screen provision apparatus according to any one of claims 1-10.

14. A computer-readable storage medium storing the program according to claim 13.

15. A program for causing 1 or more computers to function as each means of the screen provision system according to claim 11.

16. A computer-readable storage medium storing the program according to claim 15.
